# EUROPEAN PATENT APPLICATION

(11) **EP 2 894 597 A1**
(43) Date of publication of application: **15.07.2015**
(21) Application number: 14305031.8
(22) Date of filing: 10.01.2014
(51) Int. Cl.: G06Q 50/06, H02J 3/12, H02J 3/36

(54) **A method and device for controlling a power grid**

(71) Applicant: ALCATEL LUCENT, 92100 Boulogne-Billancourt (FR)
(72) Inventor: Kopp, Dieter, 70435 Stuttgart (DE); Stocker, Klaus, 70435 Stuttgart (DE); Templ, Wolfgang, 70435 Stuttgart (DE)
(74) Representative: Kröhnert, Michael

(57) **Abstract**

The invention concerns a device (100) comprising a
receiver (101) adapted to receive information about a first part (110a) of a power grid (110) at a first hierarchic level of the power grid (110) and information about a second part (110b) of the power grid (110) at a second hierarchic level of the power grid (110),
a processor (102), adapted to determine a first set point for controlling the first part (110a) of the power grid (110) and a second set point for controlling the second part (110b) of the power grid (110) depending on the received information, and
a sender (103) adapted to send information about the set points.

The invention concerns a respective method as well.

## Description

### Field of the Invention

The present invention relates to a method and device for controlling a power grid.

### Background of the Invention

A power grid is hierarchical structured comprising dedicated sub grids for example for the transport and distribution network. The individual sub grids are designed to operate at predetermined voltage levels. Transmission systems for example operates at 220 kV or 380 kV in Europe and 735 kV or 765 kV in the North America respectively. Distribution networks operate for example in the range of 1kV - 60kV in Europe and 1kV - 72.5kV in North America respectively.

Transmission and distribution lines for example use three phase alternating current, sometimes single phase alternating current is used. For very long distances or for submarine cables direct current is used as well. The voltage levels and frequency characteristics of individual sub grids is matched to optimally transmit and distribute the power in the power grid at the predetermined voltage or frequency.

However, the optimal design limits the voltage or frequency range in which individual components can operate. Therefore in operation, the power grid is controlled using frequency or voltage control that keeps the power grid within the range of safe operation. Furthermore electric load balancing is used to ensure that apart from electric losses in the power grid the energy generated by the active power generators is consumed by the active loads. As the voltage levels are fixed for each sub grid, only small variations of the voltage level within a predetermined small range are allowable. Otherwise overload or voltage drop condition may occur or components of the electrical power grid may even malfunction. Power lines are monitored to determine their maximum reliable capacity. Individual sub grids are controlled for example using distributed automation to activate or deactivate additional generators or power storage to balance the load. Likewise this way additional power lines are activated or deactivated depending on the maximum reliable capacity and the currently required capacity.

However such systems are restricted and cannot be controlled optimally.

### Summary of the Invention

The object of the invention is thus to provide a method and device for controlling a power grid more efficiently.

The main idea of the invention is a device for controlling a power grid, comprising
a receiver adapted to receive information about a first part of a power grid at a first hierarchic level of the power grid and information about a second part of the power grid at a second hierarchic level of the power grid,
a processor, adapted to determine a first set point for controlling the first part of the power grid and a second set point for controlling the second part of the power grid depending on the received information, and
a sender adapted to send information about the set points.

This increases flexibility of the power grid and facilitates readiness of the power grid for the demands for the future.

Advantageously the first set point indicates operation in different frequency than the second set point. The first set point indicates for example an alternating current operation of the first part of the power grid and the second set point indicates a direct current operation of the second part of the power grid. Any other combination of frequencies on both parts may be used as well, such as the same or different frequencies in alternating current, direct current on the first set point and alternating current on the second set point or direct current on both set points may be used as well.

Advantageously the first part of the power grid is a transport network and the second part of the power grid is a distribution network. With no fix separation between the transport and distribution network at the control level, the control is efficiently adapted to the current demand while the voltage level in each part, which is dependent of the demand and generation, is balanced at the same time.

Advantageously the receiver is adapted to receive current parameters from network elements of the power grid as information, and the processor is adapted to base a simulation of the network on the receive information, using the current parameters.

Advantageously the processor is adapted to compute the behavior of the elements by abstracted sets of characteristic curves of the elements. This means every device and element has a model acting in a control plane.

Advantageously the processor is adapted to determine a forward looking simulation of power grid parameters of at least two hierarchical levels, in particular to minimize a cost function. This way cost, through put or life time of components of the power grid may be optimized.

This increases flexibility, scalability and allows real-time adjustment due to unexpected events, e.g. break of cables drop-out for generators.

The invention concerns a respective method as well.

Further developments of the invention can be gathered from dependent claims and the following description.

### Brief Description of the Drawings

In the following the invention will be explained further making reference to the attached drawings.
- Fig. 1: schematically shows a first part of a power grid;
- Fig. 2: schematically shows a sequence diagram.

### Detailed Description of the Invention

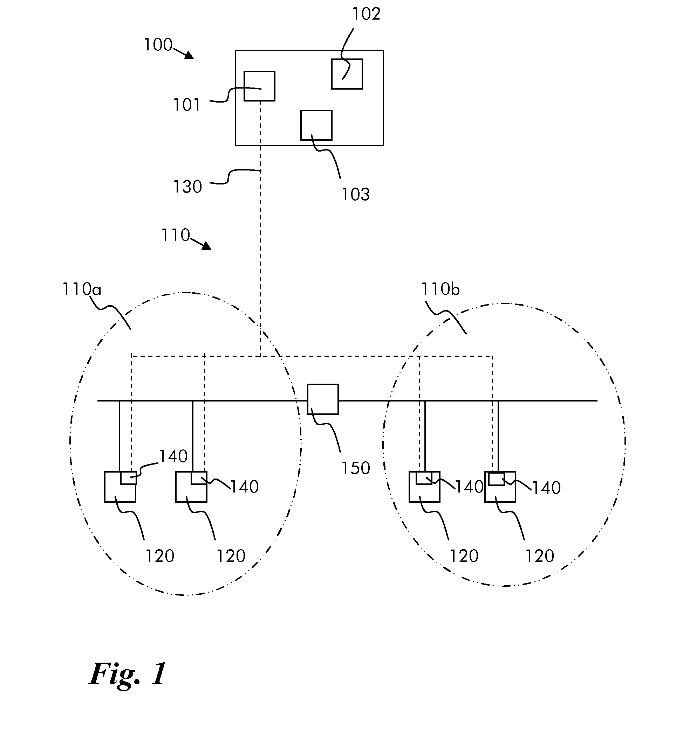

Figure 1 shows a first part of a power grid 110 comprising a device 100 and network elements 120.

The network elements 120 may be any type of network element, such as power generator, consumer load, reactance, power storage, power transformer, circuit switch or the like.

The power grid 110 is in the example split into two hierarchical levels depicted in figure 1 as a first part 110a and a second part 110b. Many more hierarchical levels may be used as well. In the example, a network element 150 separates the two hierarchical levels. The network element 150 may be a solid state transformer. Preferably the solid state transformer is adaptable for continuous power transformation e.g. within the range of DC to 60Hz on the primary side and DC to 60Hz on the secondary side.

The network element may be any other type of network element, like a network element 120 or a voltage divider.

The first part 110a in the example is a transport network with long distance power lines and the second part 110b is a distribution network with short distance power lines. Any other distinction, like campus network or submarine network may be used as well to define the hierarchical levels.

The device comprises a receiver 101, adapted to receive information about the first part 110a of the power grid 110 at the first hierarchic level of the power grid 110 and information about the second part 110b of the power grid 110 at the second hierarchic level of the power grid 110.

However the information received must not distinguish the hierarchical level itself. Rather the network elements 120 are virtually described by characteristics, e.g. parameters, giving their capabilities. The parameters are for example minimum or maximum voltage supported by the network element 120. Likewise the network elements 120 may be described by stat or current demand.

Each network element 120 in the power grid reports in the example its parameter. Likewise when state or demand are used those are reported.

The receiver 101 is further adapted to receive the current parameters from the network elements 120 as information.

The network elements 120 comprise a sender 140 adapted to send this information. The sender 140 and the receiver 101 are connectable to each other via a data link 130 for example via local area network (LAN), wireless local area network (WLAN, 802.11n) or wide area network (WAN). Said connection is for example according to the well known internet protocol (IP), user datagram protocol (UDP), transmission control protocol (TCP) or stream control transmission protocol (SCTP). Signaling is for example according to the well known Simple Object Access Protocol (SOAP), Representational State Transfer (REST) or session initiation protocol (SIP) or Internet Protocol Multimedia Subsystem (IMS). Addressing may be done using the well known uniform resource locators (URL), uniform resource identifiers (URI), names or namespaces of extensible markup language (XML Version 1.0, Third Edition, W3C Recommendation 8 December 2009).

The connection can but must not be directly between the devices. The typical use is on wide area networks with multiple intermediate devices.

The device 100 comprises a processor 102, adapted to determine a first set point for controlling the first part 110a of the power grid 110 and a second set point for controlling the second part 110b of the power grid 110 depending on the received information. The set points are for example determined according to a predetermined operating strategy. The predetermined operating strategy is for exampled stored on the device 100. The set points may be determined as mapping of the current parameters to predetermined operating strategy, e.g. as described below.

The processor 102 may further be adapted to base a simulation of the network on the receive information, using the current parameters. Furthermore the processor 102 is adapted to compute the behavior of the elements 120 by abstracted sets of characteristic curves of the elements.

The abstraction of power grid elements 120 and components for example is achieved by using a characteristic set of curves describing the static and dynamic behavior of the elements 120, considering environmental side effects and boundary conditions (e.g. weather forecasts, switch off from grid sections and the like). Examples for such elements are given in the following non exhaustive list:
o Generator (wind, solar, water, coal, nuclear, etc.)
o Power cables
o Transformers (standard and solid state)
o Consumers (city, village, stand alone).

Preferably the processor 102 is adapted to determine a forward looking simulation of power grid parameters of at least two hierarchical levels 110a, 110b, in particular to minimize a cost function.

The simulation is for example based on online or real time simulation of the network, using the current parameters from the network elements 120. The behavior of the elements 120 is computed for example by abstracted sets of the characteristic curves of the elements 120. To this end every element 120 has a representation, e.g. a model. This way forward looking simulations are extrapolated, to optimize cost, through put, life time of the complete network. This way appropriate set points can be determined as control actions to generating flexibility, scalability and to allow real-time adjustment due to unexpected events (e.g. break of cables drop-out for generators, etc.).

The set points are preferably determined from the result of the forward looking simulation, e.g. from the result received by minimizing the cost function.

The cost function may be a least square optimization of the currently remaining distances between the current capacity and maximum reliable capacity of different power lines that could be used to distribute the electric power.

The set points are for example determined indicating a target state for the network element 120 from the following non exhaustive list:
o AC or DC network, e.g. by setting a frequency set point
o different voltage levels and conversion rate, e.g. by setting target voltage for each sub grid and transformer
o power flow direction, e.g. by triggering a battery to charge or discharge
o control active power in the power grid, e.g. by adding or removing generators or consumer load in load balancing

The device 100 comprises a sender 103 adapted to send information about the set points. The information is preferably sent to the network elements 120 to trigger them to adjust their operation to the new set point.

For example the first set point indicates an alternating current operation of the first part 110a of the power grid 110 when the predetermined operating strategy indicates alternating current operation.

For example the second set point indicates a direct current operation of the second part 110b of the power grid 110 when the predetermined operating strategy indicates direct current operation.

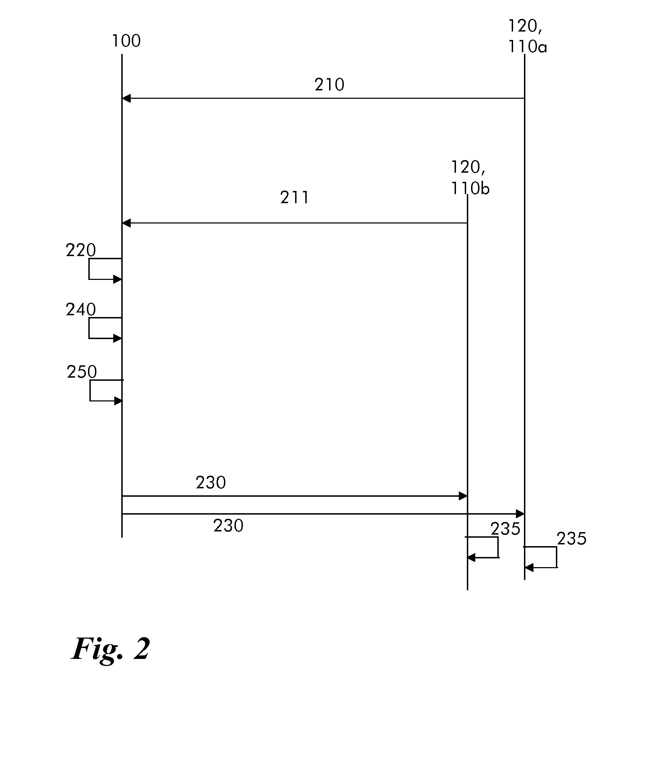

A method for controlling a power grid is described below making reference to figure 2. Here it is assumed, that the network element 120 of the first part 110a is a generator and the network element 120 of the second part 110b is a solid state transformer connecting the first sub grid 110a and the second sub grid 110b. The generator is used as a simple example and may include additional components or wiring such as step up or down converters as well as resistance or impedance. The generator in the example is connected to the primary side of the solid state transformer by a transfer line, adapted to operate in the frequency range of 0-60Hz and in a voltage range of 0-735kV. The solid state transformer is connected on its secondary side to a distribution line, adapted to operate in the frequency range of 0-60Hz and in a voltage range of 0-72,5kV.

The method comprises of receiving information in a message 210 about the first part 110a of the power grid 110 at the first hierarchic level of the power grid 110 and information in a message 211 about the second part 110b of the power grid 110 at the second hierarchic level of the power grid 110. In the example the first part 110a is the transport network and the second part 110b is the distribution network. The information received in message 210 is for example the current voltage and frequency of the transport network. The information received in message 211 is for example the current voltage and frequency of the distribution network.

The generator reports in the example operation in direct current mode, e.g. 0 Hz, at a voltage of 72,5kV. The solid state transformer reports in the example operation in direct current mode, e.g. 0 Hz, at a voltage of 72,5kV This means that current parameters from network elements 120 of the power grid are received as described above.

Upon receipt of the information, in a step 220 the first set point for controlling the first part 110a and the second set point for controlling the second part 110b is determined depending on the received information.

As described above the predetermined operating strategy may be used. Preferably aforementioned forward looking simulation is used.

For example the first set point indicates for example an alternating current operation at 60Hz and 735KV of the first part 110a and the second set point indicates a direct current operation at 0Hz and 72,5KV of the second part 110b.

Afterwards the information about the set points is sent in a message 230. In the example the information is sent in message 230 to the network elements 120. Preferably individual messages are sent to the individual devices in separate messages 230.

Upon receipt of the information in message 230, the network elements 120 are set up in a step 235 to operate in the respective mode. This results in operation of the sub grids in the desired mode as well. This means that in the example the frequency set point is set to 60Hz and 0Hz respectively. Furthermore the voltage set point is set to 735kV and 72,5kV respectively. That means that the first part 110a is operated in alternating current mode whereas the second part 110b operates in direct current mode after receipt of the information 203.

Optionally in a step 240 that is executed upon receipt of message 211, the behavior of the elements 120 is computed by abstracted sets of characteristic curves of the elements. This is for example determined by a simulation of the network based on the receive information as well using the current parameters.

Preferably in an optional step 250 that is executed after optional step 240 a forward looking simulation of power grid parameters of at least two hierarchical levels 110a, 110b is computed, in particular to minimize the cost function.

In that case the set points are calculated depending on the result of the optional steps 240 or 250. Preferably the forward looking simulation determines the best set points or the operating strategy.

The description and drawings merely illustrate the principles of the invention. It will thus be appreciated that those skilled in the art will be able to devise various arrangements that, although not explicitly described or shown herein, embody the principles of the invention. All statements herein reciting principles, aspects, and embodiments of the invention, as well as specific examples thereof, are intended to encompass equivalents thereof.

The functions of the various elements shown in the figures, including any functional blocks labelled as 'processors', may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term 'processor' or 'controller' should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that the sequence diagram represents various processes which may be substantially represented in computer readable medium and so executed by a computer or processor, whether or not such computer or processor is explicitly shown.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

## Claims

1. A device (100) comprising
a receiver (101) adapted to receive information about a first part (110a) of a power grid (110) at a first hierarchic level of the power grid (110) and information about a second part (110b) of the power grid (110) at a second hierarchic level of the power grid (110),
a processor (102), adapted to determine a first set point for controlling the first part (110a) of the power grid (110) and a second set point for controlling the second part (110b) of the power grid (110) depending on the received information, and
a sender (103) adapted to send information about the set points.

2. The device (100) according to claim 1 wherein the first set point of the first part (110a) of the power grid (110)_indicates operation in different frequency than the second set point of the second part (110b) of the power grid (110).

3. The device (100) according to claim 1 or 2, wherein the first part (110a) of the power grid (110) is a transport network and the second part (110b) of the power grid (110) is a distribution network.

4. The device (100) according to any of claims 1 to 3, wherein the receiver (101) is adapted to receive current parameters from network elements (120) of the power grid (110) as information, and the processor (102) is adapted to base a simulation of the network on the receive information, using the current parameters.

5. The device (100) according to any of claims 1 to 4, wherein the processor (102) is adapted to compute the behavior of the elements (120) by abstracted sets of characteristic curves of the elements.

6. The device (100) according to any of claims 1 to 5, wherein the processor (102) is adapted to determine a forward looking simulation of power grid parameters of at least two hierarchical levels (110a, 110b), in particular to minimize a cost function.

7. A method comprising
receiving (210, 211) information about a first part (110a) of a power grid (110) at a first hierarchic level of the power grid (110) and information about a second part (110b) of the power grid (110) at a second hierarchic level of the power grid (110),
determining (220) a first set point for controlling the first part (110a) of the power grid (110) and a second set point for controlling the second part (110b) of the power grid (110) depending on the received information, and
sending (230) information about the set points.

8. The method according to claim 7 wherein the first set point indicates an alternating current operation of the first part (110a) of the power grid (110) and the second set point indicates a direct current operation of the second part (110b) of the power grid (110).

9. The method according to claim 7 or 8, wherein the first part (110a) of the power grid (110) is a transport network and the second part (110b) of the power grid (110) is a distribution network.

10. The method according to any of claims 7 to 9, comprising receiving current parameters from network elements (120) of the power grid as information, and the processor (102) is adapted to base a simulation of the network on the receive information, using the current parameters.

11. The method according to any of claims 7 to 10, comprising computing (240) the behavior of the elements (120) by abstracted sets of characteristic curves of the elements.

12. The method according to any of claims 7 to 11, comprising determining (250) a forward looking simulation of power grid parameters of at least two hierarchical levels (110a, 110b), in particular to minimize a cost function.

## Amended claims

### Amended claims in accordance with Rule 137(2) EPC.

1. A device (100) comprising
a receiver (101) adapted to receive information about a first part (110a) of a power grid (110) at a first hierarchic level of the power grid (110) and information about a second part (110b) of the power grid (110) at a second hierarchic level of the power grid (110),
a processor (102), adapted to determine a first set point for controlling the first part (110a) of the power grid (110) and a second set point for controlling the second part (110b) of the power grid (110) depending on the received information, and
a sender (103) adapted to send information about the set points, **characterized in that** the set points indicate a target state for a network element separating the first hierarchic level and the second hierarchic level.

2. The device (100) according to claim 1 wherein the first set point of the first part (110a) of the power grid (110) indicates operation in different frequency than the second set point of the second part (110b) of the power grid (110).

3. The device (100) according to claim 1 or 2, wherein the first part (110a) of the power grid (110) is a transport network and the second part (110b) of the power grid (110) is a distribution network.

4. The device (100) according to any of claims 1 to 3, wherein the receiver (101) is adapted to receive current parameters from network elements (120) of the power grid (110) as information, and the processor (102) is adapted to base a simulation of the network on the receive information, using the current parameters.

5. The device (100) according to any of claims 1 to 4, wherein the processor (102) is adapted to compute the behavior of the elements (120) by abstracted sets of characteristic curves of the elements.

6. The device (100) according to any of claims 1 to 5, wherein the processor (102) is adapted to determine a forward looking simulation of power grid parameters of at least two hierarchical levels (110a, 110b), in particular to minimize a cost function.

7. A method comprising
receiving (210, 211) information about a first part (110a) of a power grid (110) at a first hierarchic level of the power grid (110) and information about a second part (110b) of the power grid (110) at a second hierarchic level of the power grid (110),
determining (220) a first set point for controlling the first part (110a) of the power grid (110) and a second set point for controlling the second part (110b) of the power grid (110) depending on the received information, and sending (230) information about the set points,
**characterized in that** the set points indicate a target state for a network element separating the first hierarchic level and the second hierarchic level.

8. The method according to claim 7 wherein the first set point indicates an alternating current operation of the first part (110a) of the power grid (110) and the second set point indicates a direct current operation of the second part (110b) of the power grid (110).

9. The method according to claim 7 or 8, wherein the first part (110a) of the power grid (110) is a transport network and the second part (110b) of the power grid (110) is a distribution network.

10. The method according to any of claims 7 to 9, comprising receiving current parameters from network elements (120) of the power grid as information, and to base a simulation of the network on the receive information, using the current parameters.

11. The method according to any of claims 7 to 10, comprising computing (240) the behavior of the elements (120) by abstracted sets of characteristic curves of the elements.

12. The method according to any of claims 7 to 11, comprising determining (250) a forward looking simulation of power grid parameters of at least two hierarchical levels (110a, 110b), in particular to minimize a cost function.
